# EUROPEAN PATENT APPLICATION

(11) **EP 4 641 163 A1**
(43) Date of publication of application: **29.10.2025**
(21) Application number: 23906548.5
(22) Date of filing: 16.11.2023
(51) Int. Cl.: G01M 17/007

(54) **TEST SPECIMEN TESTING SYSTEM AND TEST SPECIMEN TESTING METHOD**

(30) Priority: 19.12.2022 JP 2022202215; 19.05.2023 JP 2023082782
(71) Applicant: HORIBA, Ltd., Kyoto-shi Kyoto 601-8510 (JP)
(72) Inventor: KAWAZOE, Hiroshi, Kyoto-shi, Kyoto 601-8510 (JP)
(74) Representative: Müller Hoffmann & Partner
(86) International application number: PCT/JP2023/041298
(87) International publication number: WO 2024/135178

(57) **Abstract**

The present invention is a test specimen testing system 100 that tests a test specimen W formed by a vehicle or a portion thereof, and tests this test specimen W while reproducing the splashing generated by other vehicles traveling in the vicinity of the test specimen W, and that includes a testing apparatus 2 on which the test specimen W is mounted or to which the test specimen W is connected, and a splashing simulator 3 that simulates splashing from other vehicles traveling in the vicinity of the test specimen W.

## Description

### [Technical Field]

The present invention relates to a test specimen testing system that tests a test specimen in the form of a vehicle or a portion thereof, and to a test specimen test specimen testing method.

### [Technical Background]

Conventionally, as is shown in Patent Document 1, an apparatus equipped with an actual vehicle traveling bench apparatus on which a vehicle to be tested is mounted, and an environment reproduction mechanism that reproduces a peripheral environment around the vehicle being tested has been devised as a vehicle driving test apparatus. The environment reproduction mechanism is provided with rain-making equipment and fog-generating equipment and the like. In this vehicle driving test apparatus, rainy conditions testing can be performed by reproducing the rainy conditions using the rain-making equipment while the vehicle being tested is made to travel on the actual vehicle traveling bench.

However, this vehicle driving test apparatus does not reproduce the splashing during wet weather that is caused by the tire rotation of other vehicles that are traveling in the vicinity of the vehicle being tested. Accordingly, a wet-weather test of a vehicle being tested performed using this vehicle driving test apparatus is different from a wet-weather test performed in a real-world environment. In particular, in a case in which a sensor mounted in a vehicle being tested is being evaluated, in spite of it being it is essential to reproduce the recognition environment of the sensor, because the aforementioned splashing cannot be reproduced by the above-described vehicle driving test apparatus, it is not possible to make an evaluation that takes this splashing into account.

### [Documents of the Prior Art]

### [Patent Documents]

[Patent Document 1] Japanese Unexamined Patent Application (JP-A) No. S57-184943

### [Disclosure of the Invention]

### [Problems to be Solved by the Invention]

The present invention was conceived in view of the above-described circumstances, and it is a principal object thereof to make it possible to test a test specimen while reproducing the splashing generated by other vehicles traveling in the vicinity of, such as in front of, to the side of, or to the rear of the test specimen.

### [Means for Solving the Problem]

In other words, a test specimen testing system according to the present invention is a test specimen testing system that tests a test specimen formed by a vehicle or a portion thereof, and that is characterized in being provided with a testing apparatus on which the test specimen is mounted or to which the test specimen is connected, and with a splashing simulator that simulates splashing from other vehicles traveling in the vicinity of the test specimen.

If this type of structure is employed, then because the test specimen testing system is provided with a splashing simulator that simulates splashing from other vehicles traveling in the vicinity of, such as in front of, to the side of, or to the rear of the test specimen, it is possible to test a test specimen while reproducing the splashing generated by other vehicles traveling in the vicinity of, such as in front of, to the side of, or to the rear of the test specimen.

As a specific aspect of the splashing simulator, it is desirable that the splashing simulator be provided with simulated rotating bodies that simulate tire-fitted wheels of the other vehicle, and with a water supply unit that supplies water to the simulated rotating bodies so as to cause splashing to be generated from the simulated rotating bodies.

If this type of structure is employed, then because water is supplied to simulated rotating bodies that simulate tire-fitted wheels of another vehicle, it is possible to test a test specimen while more reliably reproducing the splashing generated by other vehicles traveling in the vicinity of, such as in front of, to the side of, or to the rear of the test specimen.

In order to reproduce the splashing generated in a real-world environment, it is desirable that there be provided a contact surface that is in contact with the simulated rotating bodies so as to simulate the ground contact of tire-fitted wheels.

As a specific aspect of the contact surface, it is desirable that the contact surface be formed by a roller, a belt, or a panel.

In addition, in order to reproduce the splashing generated in a real-world environment, it is desirable that the contact surface have bumps and indentations so as to simulate an actual road.

As the test specimen that is favorably used in the testing system of the present invention, it is desirable that the test specimen be an autonomous driving vehicle or a vehicle having an advanced driver-assistance system or a portion thereof, and include sensors that acquire information about a peripheral area around the vehicle.

A specific aspect of the testing apparatus that may be considered is an aspect in which the testing apparatus causes the test specimen to perform simulated traveling, or places the autonomous driving system or advanced driver-assistance system of the test specimen in a state of operation.

A specific example of a testing apparatus that causes the test specimen to perform simulated traveling is a testing apparatus that is provided with rotating bodies on which are placed tire-fitted wheels of the test specimen, or with rotating bodies to which a vehicle axle, wheels, or tire-fitted wheels of the test specimen are connected.

Furthermore, it is also desirable that the test specimen be an autonomous driving vehicle or a vehicle having an advanced driver-assistance system or a portion thereof, and include sensors that acquire information about a peripheral area around the vehicle, and that the splashing simulator be further provided with a rotation control unit that controls a rotation of the simulated rotating bodies, and that the rotation control unit control the rotation of the simulated rotating bodies so as to correspond to a vehicle speed of the test specimen that is performing simulated traveling using the testing apparatus, or with a vehicle speed signal that is input into the autonomous driving system or advanced driver-assistance system of the test specimen.

If this type of structure is employed, then it is possible to reproduce the splashing generated by a vehicle traveling at a similar speed as the test specimen, and in front of the test specimen, or to the side thereof, or to the rear thereof.

In addition, because, depending on the vehicle, there is a possibility of splash guards being provided on some vehicles, in order to reproduce the splashing generated in a real-world environment while taking this possibility into account, it is desirable that a splash guard be provided on the test specimen side of each simulated rotating body.

In order to reproduce a variety of situations by enabling the distances between the test specimen and a vehicle in front, a vehicle to the side, or a vehicle to the rear to be altered, it is desirable that there be further provided a repositioning mechanism that repositions the simulated rotating bodies relative to the test specimen.

In order to reproduce the splashing generated in a real-world environment, it is desirable that the testing system of the present invention be further provided with an air blower that blows air onto the simulated rotating bodies.

It is also desirable that the test specimen testing system of the present invention be further provided with a simulated structural body that is disposed in the vicinity of the simulated rotating bodies, and simulates a vehicle body of another vehicle traveling in the vicinity of the test specimen. Such a structure further enables the splashing generated in a real-world environment to be reproduced.

Moreover, a specific aspect of the splashing simulator that may be considered is an aspect in which the splashing simulator is provided with a plurality of nozzles having different spray characteristics. Here, these different spray characteristics may include different spray directions, different spray quantities, different spray distances, different spray spread angles, and/or different spray droplet sizes and the like. If this type of structure is employed, then a portion of the plurality of nozzles may be set so as to simulate splashing thrown up from a vehicle wheel, and another portion of the plurality of nozzles may be set so as to simulate splashing caused by updrafts generated by airflow from the rear of another vehicle.

Moreover, a test specimen testing method according to the present invention is a testing method in which a test specimen formed by a vehicle or a portion thereof is tested, and is characterized in that water is supplied to simulated rotating bodies that simulate tire-fitted wheels of another vehicle traveling in the vicinity of the test specimen, and the test specimen is tested using a testing apparatus while splashing is being generated from the simulated rotating bodies.

Moreover, a test specimen testing system according to the present invention is a test specimen testing system that tests a test specimen formed by a vehicle or a portion thereof, and that is characterized in being provided with a testing apparatus on which the test specimen is mounted or to which the test specimen is connected, simulated rotating bodies that simulate tire-fitted wheels of another vehicle traveling in the vicinity of the test specimen, and a water supply unit that supplies water to the simulated rotating bodies so as to cause splashing to be generated from the simulated rotating bodies.

Furthermore, a test specimen testing system according to the present invention is a test specimen testing system that tests a test specimen formed by a vehicle or a portion thereof, and that is characterized in being provided with a testing apparatus on which the test specimen is mounted or to which the test specimen is connected, and water supply units that supply water to tire-fitted wheels of the test specimen or to simulated rotating bodies that are disposed in the vicinity of the tire-fitted wheels so as to simulate those tire-fitted wheels, and that thereby cause splashing to be generated from the tire-fitted wheels or from the simulated rotating bodies.

If this type of structure is employed, then it is possible to test a test specimen while reproducing the splashing generated by the vehicle wheels of the test specimen itself.

### [Effects of the Invention]

According to the above-described present invention, it is possible to test a test specimen while reproducing the splashing generated from another vehicle traveling in front of, to the side of, or to the rear of the test specimen.

### [Brief Description of the Drawings]

[FIG. 1] FIG. 1 is a schematic diagram showing a scenario in which a test specimen testing method that utilizes a test specimen testing system according to an embodiment of the present invention is employed.
[FIG. 2] FIG. 2 is an example of an overall schematic diagram of the test specimen testing system according to the same embodiment.
[FIG. 3] FIG. 3 is another example of an overall schematic diagram of the test specimen testing system according to the same embodiment.
[FIG. 4] FIG. 4 is a side view schematically showing a structure of a splashing simulator of the same embodiment.
[FIG. 5] FIG. 5 is a schematic diagram showing bumps and indentations in a contact surface of the same embodiment.
[FIG. 6] FIG. 6 is a schematic diagram showing structural examples of contact surfaces of the same embodiment.
[FIG. 7] FIG. 7 is a schematic diagram showing an example of a structural body and an air blower being used in the same embodiment.
[FIG. 8] FIG. 8 is a schematic diagram showing examples of a structure in which a rotation of simulated rotating bodies is controlled in accordance with a traveling speed of a test specimen in the same embodiment.
[FIG. 9] FIG. 9 is a schematic diagram showing an example of a repositioning mechanism being used in the same embodiment.
[FIG. 10] FIG. 10 is an example of an overall schematic diagram of a test specimen testing system according to a variant embodiment.
[FIG. 11] FIG. 11 is an example of an overall schematic diagram of a test specimen testing system according to a variant embodiment.

### [Best Embodiments for Implementing the Invention]

Hereinafter, an embodiment of a test specimen testing system according to the present invention will be described with reference to the drawings.

Note that, in order to simplify an understanding thereof, each of the drawings depicted below is shown schematically with omissions or enhancements made where these have been deemed appropriate. In addition, component elements that are the same in the respective drawings are indicated by the same descriptive symbols and any duplicated description thereof is omitted.

A test specimen testing system 100 of the present embodiment is used in order to test a test specimen W which is formed, for example, by a vehicle equipped with an advanced driver assistance system ((ADAS) hereinafter, referred to as an ADAS vehicle) or an autonomous driving vehicle (hereinafter, referred to as an AD vehicle), or is formed by a portion of these vehicles. In the present embodiment, a complete ADAS vehicle or a complete AD vehicle is used as the test specimen W, however, provided that the test specimen W is capable of running then it does not need to be a complete vehicle, and may instead be an incomplete vehicle (i.e., may be a portion of an ADAS vehicle or an AD vehicle). Alternatively, the test specimen W may be a sensor unit (such as, for example, a camera, milliwave radar, an infrared sensor, or LiDAR or the like.

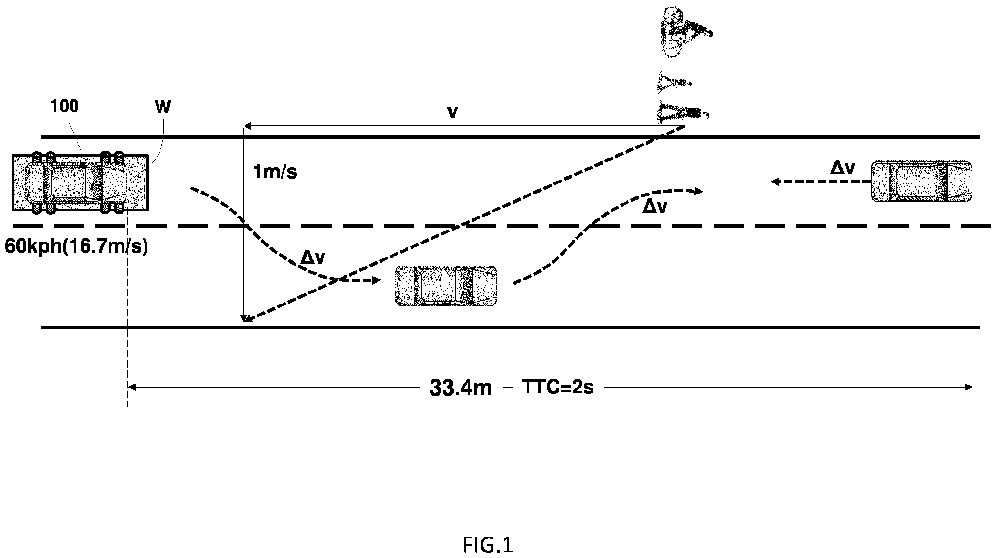

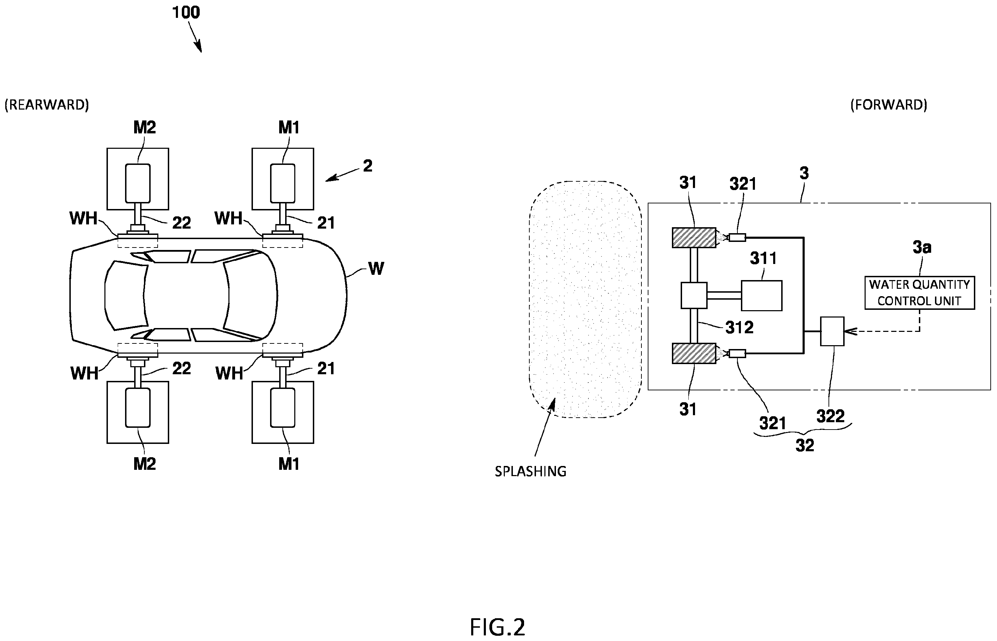

An example of a scenario in which a test specimen testing method utilizing the test specimen testing system 100 of the present embodiment may be employed is shown in FIG. 1 and FIG. 2. Here, a method may be considered in which behaviors of the test specimen W (for example, lane keeping, passing, lane changing, or emergency avoidance steering or the like) are evaluated by changing the peripheral environment in front of, to the rear of, or to the side of the test specimen W and inputting simulation signals into the sensors of the test specimen W at the same time as the test specimen W is being made to run on the test specimen testing system 100. Note that the sensors of the test specimen W acquire information about a peripheral area around that test specimen W, and examples thereof may include cameras, milliwave radars, infrared sensors, and LiDAR and the like.

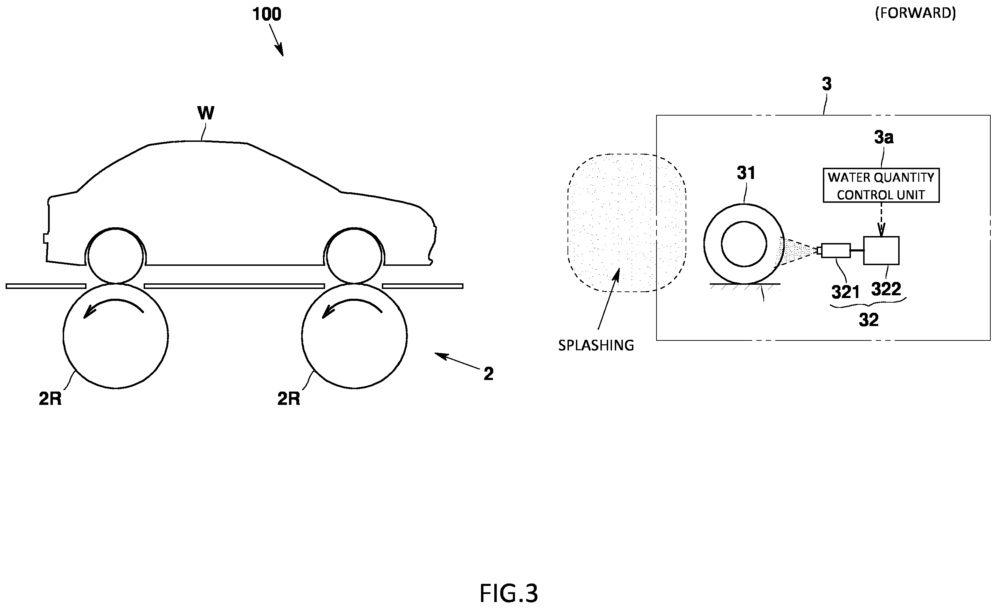

More specifically, as is shown in FIG. 2 and FIG. 3, the test specimen testing system 100 of the present embodiment is provided with a testing apparatus 2 on which the test specimen W is mounted or to which the test specimen W is connected, and with a splashing simulator 3 that simulates splashing from another vehicle traveling in the vicinity of (i.e., to the front, rear, or side thereof) the test specimen W.

The testing apparatus 2 is equipped with rotating bodies (see FIG. 2) to which axles, wheels, or tire-fitted wheels of a test body are connected (see FIG. 2), or with rotating bodies 2R on which the tire-fitted wheels of the test specimen W are placed (see FIG. 3). The rotating bodies on which the tire-fitted wheels of the test specimen W are placed may be, for example, rollers of a chassis dynamometer, or may be free rollers that are able to rotate freely by themselves. In addition, the rotating bodies to which the axles, wheels, or tire-fitted wheels of the test specimen W are connected may be, for example, dynamometers, or motors, or rotation shafts. Moreover, each of these dynamometers, or motors, or rotation shafts may be connected via universal joints or the like to the axles, wheels, or tire-fitted wheels via universal joints or the like.

The testing apparatus 2 shown in FIG. 2 has a structure in which front-wheel side motors M1 are connected via rotation shafts 21 (i.e., front-side rotation shafts) to the wheels WH or the axles of front left and right tire-fitted wheels W1, and rear-wheel side motors M2 are connected via rotation shafts 22 (i.e., rear-side rotation shafts) to the wheels WH or the axles of rear left and right tire-fitted wheels W2. Here, the rotation shafts 21 that are connected to the wheels WH or the axles of the front left and right tire-fitted wheels W1 can be formed using an extendible structure of a spline structure that includes joints having a floating function such as constant velocity joints or universal joints or the like. The rotation shafts 22 that are connected to the wheels WH or the axles of the rear left and right tire-fitted wheels W2 can also be formed using an extendible structure of a spline structure. Note that the test specimen W may be installed on a supporting base via free wheel hubs, or may be fixed in a state of floating above the road surface using a fixing mechanism such as a jack or the like.

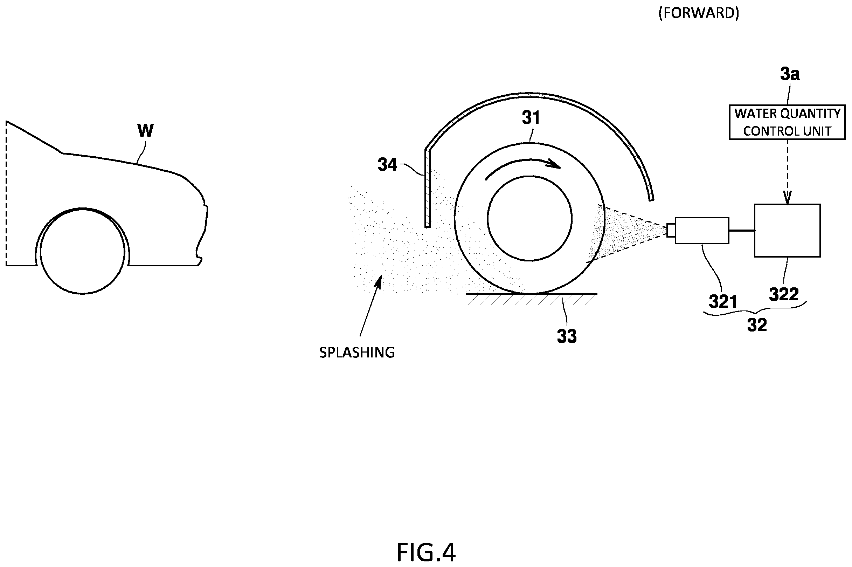

As is shown in FIG. 2 through FIG. 4, the splashing simulator 3 is provided with simulated rotating bodies 31 that simulate the tire-fitted wheels of another vehicle that is traveling in the vicinity of the test specimen W, and with a water supply unit 32 that supplies water to the simulated rotating bodies 31 so as to cause splashing to be generated from the simulated rotating bodies 31.

The simulated rotating bodies 31 are located, for example, in front of the test specimen W, and simulate the tire-fitted wheels of another vehicle that is traveling in the vicinity of the test specimen W. The simulated rotating bodies 31 may be formed, for example, by tire-fitted vehicle wheels, or may simulate tire-fitted vehicle wheels, or an actual vehicle may be used. In a case in which the simulated rotating bodies 31 simulate tire-fitted vehicle wheels, it is desirable that the simulated rotating bodies 31 be provided with a tread pattern of tire-fitted vehicle wheels.

Moreover, the simulated rotating bodies 31 are formed so that they are able to be rotated by a motor 311. In the present embodiment, two simulated rotating bodies 31 are provided so as to simulate a pair of left and right tire-fitted wheels. These two simulated rotating bodies 31 are linked together by means of a drive shaft 312, and the motor 311 is connected to the drive shaft 312. The two simulated rotating bodies 31 are rotated in mutual synchronization as a result of the drive shaft 312 being rotated by the motor 311. The motor 311 is controlled by a rotation control unit 3c, and the rotation control unit 3c causes the simulated rotating bodies 31 to rotate at a predetermined rotation speed.

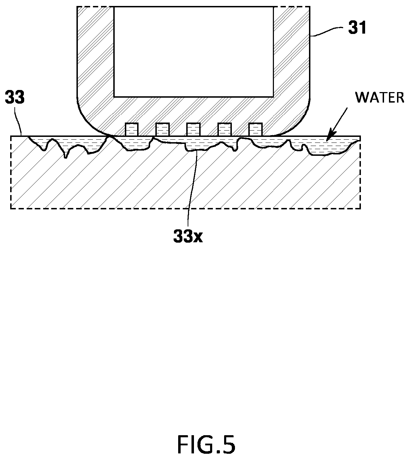

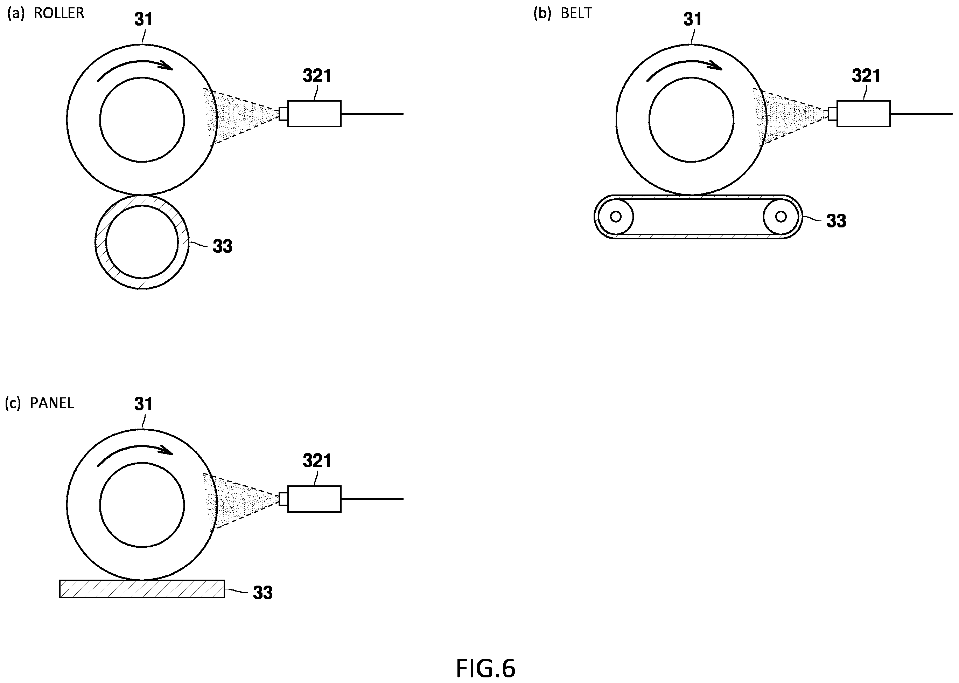

Here, the splashing simulator 3 has a contact surface 33 that is in contact with the simulated rotating bodies 31 so as to simulate a contact with the ground by tire-fitted vehicle wheels. As is shown in FIG. 5, the contact surface 33 has bumps and indentations 33x that simulate a road surface. As is shown in FIG. 6, the contact surface 33 may be formed by a roller, a belt, or a panel. Note that a roller and a belt rotate so as follow the rotation of the simulated rotating bodies 31. On the other hand, a panel is fixed so as to be immobile irrespective of the rotation of the simulated rotating bodies 31, and has a low coefficient of friction that enables the simulated rotating bodies 31 to slide over the surface thereof. In addition, in a case in which a panel is used, instead of using a panel having a low coefficient of friction, it is also possible to adjust the load acting on the panel as a result of the simulated rotating bodies 31 being mounted thereon.

The water supply unit 32 supplies water from the front side of the simulated rotating bodies 31 (i.e., from the opposite side to the test specimen W side). This water supply unit 32 includes nozzles 321 that are disposed in front of the simulated rotating bodies 31, and a water supply source 322 that supplies water to the nozzles 321. Here, either one or a plurality of nozzles 321 are provided for each one of the simulated rotating bodies 31.

It is also possible for the water supply unit 32 to be formed such that the quantity of water that is supplied to the simulated rotating bodies 31 can be adjusted in order to adjust the amount of splashing. Note that the water supply source 322 may be provided with a water quantity adjustment mechanism (not shown in the drawings), or alternatively, a water quantity adjustment mechanism (not shown in the drawings) such as a valve or the like may be provided between the water supply source 322 and the nozzles 321. Note also that this water quantity adjustment mechanism is controlled by a water quantity control unit 3a (see FIG. 2 through FIG. 4). For example, a structure in which the quantity of water that is supplied to the simulated rotating bodies 31 is increased proportionally as the traveling speed is increased may be considered. Additionally, a structure in which the quantity of water that is supplied to the simulated rotating bodies 31 is increased proportionally as the assumed amount of rainfall increases may also be considered.

It is also possible for splash guards 34 to be provided on the splashing simulator 3 of the present embodiment on the test specimen W side of the simulated rotating bodies 31. The splash guards 34 simulate splash guards that are provided on a vehicle.

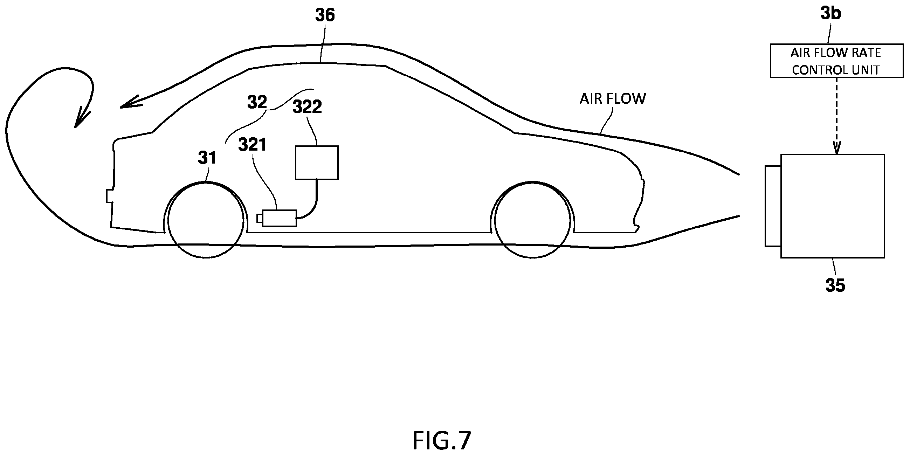

Moreover, as is shown in FIG. 7, it is also possible for the splashing simulator 3 to be additionally provided with a simulated structural body 36 that is disposed around the periphery of the simulated rotating bodies 31, and simulates a vehicle body of a vehicle that is traveling in the vicinity of the test specimen W. This simulated structural body 36 may be an actual real-life vehicle body, or may be a dummy vehicle simulating a vehicle body, or may be an equivalent aerodynamic dummy having equivalent aerodynamic characteristics to those of the vehicle body of an actual real-life vehicle. Note that it is also possible for the simulated structural body 36 to be formed having the splash guards 34. In addition, the simulated structural body 36 also becomes a sensing target for the sensors of the test specimen W.

Furthermore, in order to simulate actual traveling, it is also possible for the splashing simulator 3 to be additionally provided with an air blower 35 that blows air onto the simulated rotating bodies 31. A structure may be considered in which this air blower 35 is disposed in front of the simulated rotating bodies 31 (i.e., on the opposite side from the test specimen W). Moreover, it is also possible to employ a structure in which the air blower 35 is able to be moved relatively to the simulated rotating bodies 31 or the like so that the direction of the air being blown onto the simulated rotating bodies 31 is able to be altered. In addition, a structure may also be employed that enables the rate of the airflow generated by the air blower 35 to be varied by an airflow rate control unit 3b in accordance with the running speed of the test specimen W.

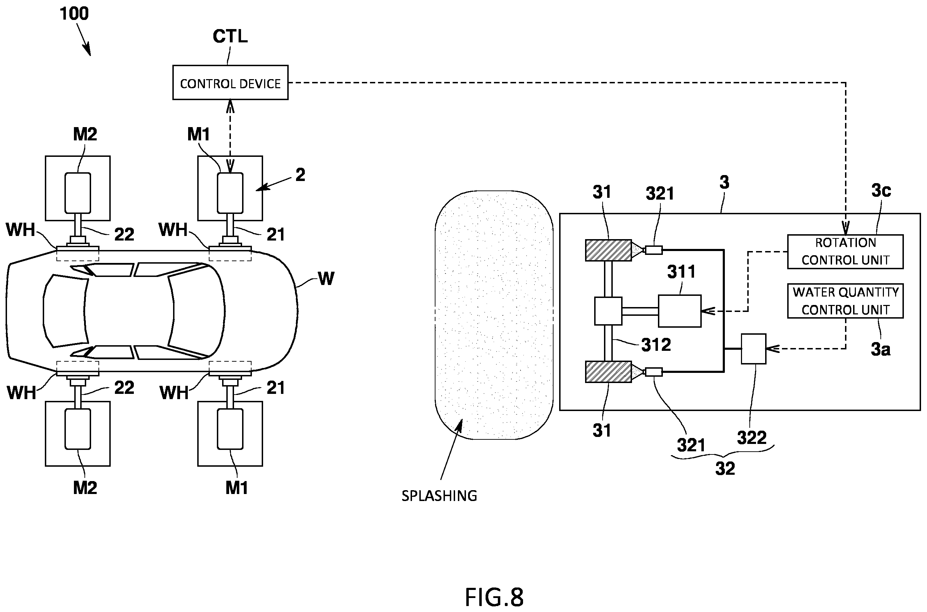

Furthermore, as is shown in FIG. 8, it is also possible for a rotation control unit 3c of the splashing simulator 3 to control the rotation of the simulated rotating bodies 31 so as to correspond to the vehicle speed of the test specimen W. More specifically, the rotation control unit 3c controls the speed of rotation of the simulated rotating bodies 31 so as to simulate a vehicle that is traveling within a predetermined relative speed differential range relative to the traveling speed of the test specimen W. Moreover, it is also possible for the rotation control unit 3c to control the speed of rotation of the simulated rotating bodies 31 so as to simulate another vehicle that is traveling at a speed that is outside this predetermined relative speed differential range in order to simulate another vehicle passing the test specimen W or another vehicle being passed by the test specimen W. Here, a structure in which the rotation control unit 3c acquires speed information from the test specimen W may be employed, or alternatively, a structure in which the rotation control unit 3c acquires speed information for the test specimen W from a control device CTL of the testing apparatus 2 may be employed.

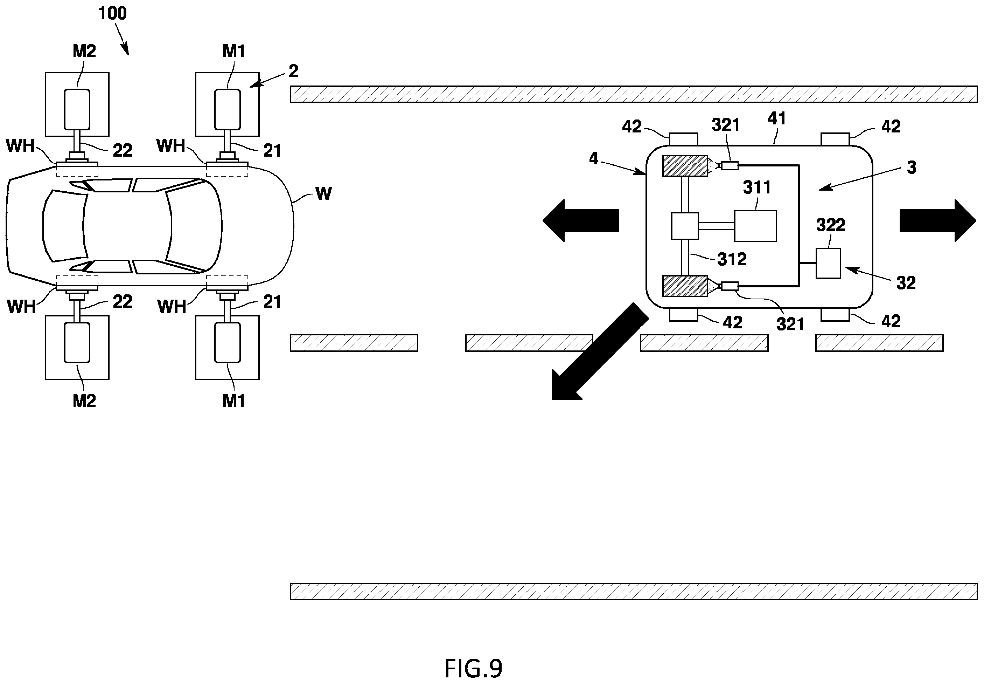

In addition, as is shown in FIG. 9, it is also possible for the test specimen testing system 100 of the present embodiment to be further provided with a repositioning mechanism 4 that repositions the simulated rotating bodies 31 relative to the test specimen W. This repositioning mechanism 4 repositions the simulated rotating bodies 31 relative to the test specimen W by, for example, repositioning the splashing simulators 3. The repositioning mechanism 4 may include, for example, a base unit 41 on which the splashing simulators 3 are mounted, and movement mechanism units 42 that cause the base unit 4 to move forwards or backwards, to the left or right, or diagonally. Structures that utilize tire-fitted vehicle wheels, for example, may be considered for the movement mechanism units 42. A structure that causes the simulated rotating bodies 31 to move forwards or backwards relative to the test specimen W may be employed for the repositioning mechanism 4, or a structure that causes the simulated rotating bodies 31 to move to the left or right relative to the test specimen W may be employed, or alternatively, a structure that causes the simulated rotating bodies 31 to move in all of these directions may be employed. The repositioning mechanism 4 repositions the water supply unit 32 together with the simulated rotating bodies 31.

### [Effects Obtained from the Present Embodiment]

According to the test specimen testing system 100 of the present embodiment that is formed in the manner described above, because water is supplied to the simulated rotating bodies 31 that simulate the tire-fitted wheels of another vehicle that is traveling in the vicinity of, namely, in front of, to the side of, or to the rear or the like of the test specimen W so as to generate splashing from the simulated rotating bodies 31, it is possible to test the test specimen W while reproducing the splashing that is caused by another vehicle traveling in the vicinity of, namely, in front of, to the side of, or to the rear or the like of the test specimen W.

### [Additional Embodiments]

The simulated rotating bodies 31 of the above-described embodiment are formed, for example, as a left-right pair, however, in order, for example, to simulate a two-wheeled vehicle traveling in the vicinity of the test specimen W, it is also possible for a single simulated rotating body 31 to be employed.

Moreover, it is also possible to employ a structure in which the angle of inclination of the contact surface 33 of the simulated rotating bodies 31 is able to be altered. If this type of structure is employed, then it is possible to reproduce splashing that corresponds to a gradient of a road surface.

Furthermore, it is also possible for the test specimen testing system 100 of the above-described embodiment to be provided with a combination of rain-making apparatuses in addition to the splashing simulator 3.

The water supply unit 32 of the above-described embodiment supplies water in a liquid state, however, it is also possible for the water supply unit 32 to supply frozen water (i.e., snow), or a mixture (i.e., sleet) of liquid water and frozen water (i.e., snow).

In addition, it is also possible to employ a structure in which the water supply unit 32 supplies water from underneath the simulated rotating bodies 31. In this case, a structure may be considered in which a recessed portion that is able to store water is formed in the contact surface 33, and the water supply unit 32 supplies water to the simulated rotating bodies 31 by storing water in this recessed portion. If this type of structure is employed, then it is possible to reproduce the splashing that is generated when a vehicle travels on a wet road surface or through puddles collected on a road surface.

The testing apparatus of the above-described embodiment causes the test specimen W to physically perform simulated traveling, however, the testing apparatus may instead be a computer such as, for example, a simulator or the like that inputs simulation signals into the test specimen W so as to cause the autonomous driving system or the advanced driver assistance system of the test specimen W to be placed in a state of operation. In this case, a structure may be considered in which the rotation control unit 3c controls the rotation of the simulated rotating bodies so as to correspond to the vehicle speed signals that are input into the autonomous driving system or the advanced driver assistance system of the test specimen W.

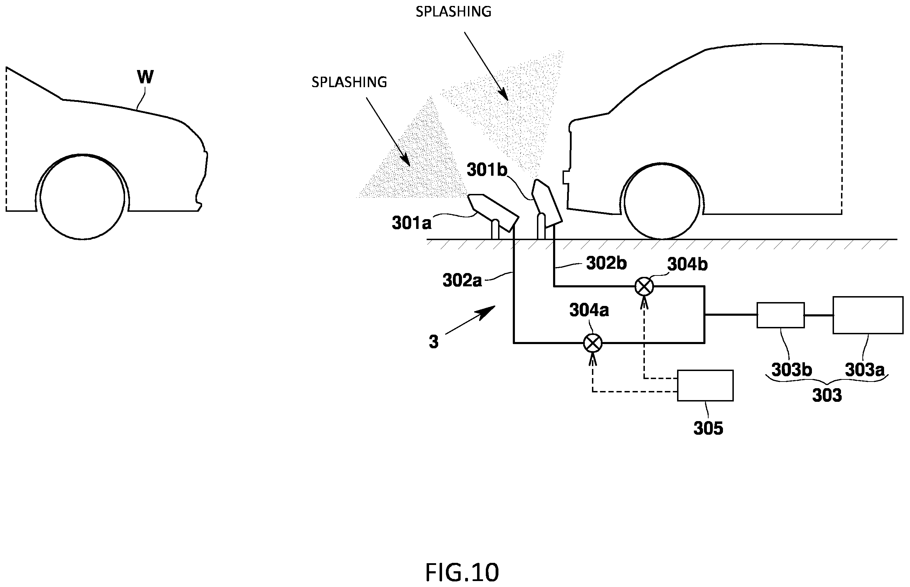

Furthermore, as is shown in FIG. 10, in addition to the structure described in the above embodiment, it is also possible for the splashing simulator 3 to have a structure in which a plurality of nozzles that generate splashing are employed. A structure in which a plurality of nozzles having mutually different spray characteristics are used is also possible. By employing such structures, it becomes possible to create splashing having mutually different characteristics. Note that, in FIG. 10, a splashing simulator 3 that uses two nozzles 301a and 301b is illustrated, however, the number of nozzles is not limited to this.

This splashing simulator 3 is provided with the plurality of nozzles 301a and 301b, and with water supply flow paths 302a and 302b that supply water to these nozzles 301a and 301b. The water supply flow paths 302a and 302b are connected to the water supply source 303. The water supply source 303 may be formed, for example, by a water storage tank 303a and a water compressor 303b. Moreover, adjustment valves 304a and 304b that are used to adjust the supply flow rate or the supply pressure of the water that is supplied to the nozzles 301a and 301b are provided respectively on the water supply flow paths 302a and 302b. The valve openings of these adjustment valves 304a and 304b are independently adjusted by the valve control unit 305.

It is also possible for the nozzles 301a and 301b to be formed having mutually different spray characteristics. For example, a structure may be employed in which the spray directions of the respective nozzles 301a and 301b can be made mutually different from each other by adjusting the mounting angles thereof or the like. Moreover, by choosing nozzles 301a and 301b having appropriate specifications or the like, it is possible to make the spread angles thereof mutually different from each other. It is also possible to make the spray quantities of the respective adjustment valves 304a and 304b mutually different from each other by adjusting the valve openings thereof or the like. Moreover, by choosing nozzles 301a and 301b having appropriate specifications or the like, it is also possible to make the sizes of the water droplets of the splashing generated by each nozzle mutually different from each other. Furthermore, it is also possible to make the spray pressure of the respective adjustment valves 304a and 304b mutually different from each other by adjusting the valve openings thereof or the like.

By causing the respective spray characteristics to be mutually different from each other as is described above, it is possible to make one of the plurality nozzles 301a and 301b simulate splashing thrown up from a vehicle wheel of another vehicle, and to make the other of the plurality of nozzles 301a and 301b simulate splashing caused by updrafts generated by the rearward airflow from other vehicle shapes.

Using the nozzle that simulates splashing thrown up by a tire-fitted vehicle wheel, it is possible to simulate splashing that is thrown up by a variety of tire configurations, tire sizes, and tire rotation speeds. On the other hand, using the nozzle that simulates splashing caused by updrafts generated by airflow from another vehicle, it is possible to simulate splashing that is caused by updrafts from a variety of vehicle body configurations in the other vehicle.

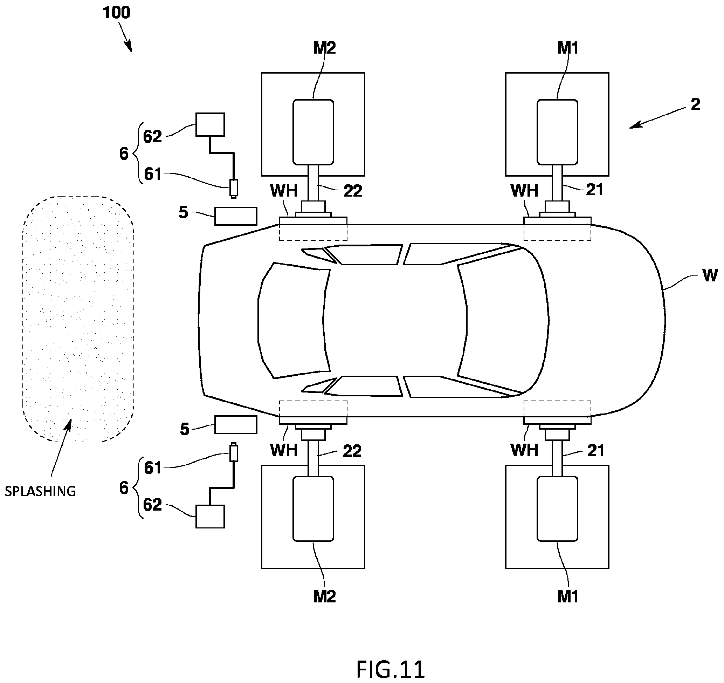

Moreover, as is shown in FIG. 11, it is also possible for the test specimen testing system 100 to be provided with a splashing simulator 3 that generates splashing from the tire-fitted wheels of the actual test specimen vehicle itself. In other words, this test specimen testing system 100 is provided with a testing apparatus 2 on which the test specimen W is mounted or to which the test specimen W is connected, and with a second splashing simulator that simulates splashing from tire-fitted vehicle wheels of the test specimen W. This second splashing simulator is provided with water supply units 6 that supply water either to the tire-fitted wheels of the test specimen, or to simulated rotating bodies 5 that are located adjacently to the tire-fitted vehicle wheels of the test specimen and simulate these tire-fitted vehicle wheels. As a result, the water supply units 6 are able to cause splashing to be generated from the tire-fitted vehicle wheels or from the simulated rotating bodies. Here, the testing apparatus 2 is the same as that in the above-described embodiment. In addition, the structure of the water supply units 6 is the same as that of the water supply unit 32 of the above-described embodiment, and each water supply unit 6 has a nozzle 61 and a water supply source 62 that supplies water to that nozzle 61. In a case in which water is to be supplied to a tire-fitted vehicle wheel, the water may be supplied to the left and right rear wheels, or to the left and right front wheels. Moreover, a simulated rotating body 5 may be individually provided adjacently to each of the left and right rear wheels, and they may also be individually provided adjacently to each of the left and right front wheels. Note that, in FIG. 11, an example is shown in which a simulated rotating body 5 is provided adjacently to each of the left and right rear wheels, and the water supply units 6 supply water to the respective simulated rotating bodies 5. These structures may be used in combination with the structures of the above-described embodiments, or they may be used independently thereof. Note that it is also possible to use a plurality of nozzles having mutually different spray characteristics, such as in the structure illustrated in FIG. 10, as the second splashing simulators.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims.

### [Industrial Applicability]

According to the present invention, it is possible to test a test specimen while reproducing the splashing generated by other vehicles traveling in the vicinity of the test specimen.

### [Description of the Reference Numerals]

- 100: Test Specimen Testing System
- W: Test Specimen
- 2: Testing Apparatus
- 3: Splashing Simulator
- 31: Simulated Rotating Bodies
- 3c: Rotation Control Unit
- 32: Water Supply Unit
- 33: Contact Surface
- 34: Splash Guard
- 35: Air Blower
- 36: Simulated Structural Body
- 4: Repositioning Mechanism

## Claims

1. A test specimen testing system that tests a test specimen formed by a vehicle or a portion thereof, comprising:
a testing apparatus on which the test specimen is mounted or to which the test specimen is connected; and
a splashing simulator that simulates splashing from another vehicle traveling in the vicinity of the test specimen.

2. The test specimen testing system according to Claim 1, wherein the splashing simulator includes:
simulated rotating bodies that simulate tire-fitted wheels of the other vehicle; and
a water supply unit that supplies water to the simulated rotating bodies so as to cause splashing to be generated from the simulated rotating bodies.

3. The test specimen testing system according to Claim 2, wherein the test specimen testing system comprises a contact surface that is in contact with the simulated rotating bodies so as to simulate ground contact of the tire-fitted wheels of the other vehicle.

4. The test specimen testing system according to Claim 3, wherein the contact surface is formed by a roller, a belt, or a panel, and has bumps and indentations that simulate an actual road.

5. The test specimen testing system according to any one of Claim 2 through Claim 4, wherein a splash guard is provided on the test specimen side of each of the simulated rotating bodies.

6. The test specimen testing system according to any one of Claim 1 through Claim 5, wherein the test specimen is an autonomous driving vehicle or a vehicle having an advanced driver-assistance system, or is a portion of these, and includes sensors that acquire information about a peripheral area around the vehicle.

7. The test specimen testing system according to Claim 6, wherein the testing apparatus causes the test specimen to perform simulated traveling, or places the autonomous driving system or advanced driver-assistance system of the test specimen in a state of operation.

8. The test specimen testing system according to any one of Claim 1 through Claim 7, wherein the testing apparatus is provided with rotating bodies on which are placed vehicle wheels of the test specimen, or with rotating bodies to which a vehicle axle, wheels, or tire-fitted wheels of the test specimen are connected.

9. The test specimen testing system according to any one of Claim 2 through Claim 5, wherein
the test specimen is an autonomous driving vehicle or a vehicle having an advanced driver-assistance system, or is a portion of these, and includes sensors that acquire information about a peripheral area around the vehicle, and wherein
the splashing simulator is further provided with a rotation control unit that controls a rotation of the simulated rotating bodies, and wherein
the rotation control unit controls the rotation of the simulated rotating bodies so as to correspond to a vehicle speed of the test specimen that is performing simulated traveling using the testing apparatus, or with a vehicle speed signal that is input into the autonomous driving system or advanced driver-assistance system of the test specimen.

10. The test specimen testing system according to any one of Claim 2 through Claim 9, wherein the test specimen testing system further comprises a repositioning mechanism that repositions the simulated rotating bodies relative to the test specimen.

11. The test specimen testing system according to any one of Claim 1 through Claim 10, wherein the test specimen testing system further comprises an air blower that blows air onto the simulated rotating bodies.

12. The test specimen testing system according to any one of Claim 2 through Claim 11, wherein the test specimen testing system further comprises a simulated structural body that is disposed in the vicinity of the simulated rotating bodies, and simulates a vehicle body of another vehicle traveling in the vicinity of the test specimen.

13. The test specimen testing system according to Claim 1, wherein the splashing simulator is provided with a plurality of nozzles having different spray characteristics.

14. A test specimen testing method in which a test specimen formed by a vehicle or a portion thereof is tested, and in which
the test specimen is tested using a testing apparatus while splashing is generated using a splashing simulator that simulates splashing from another vehicle traveling in the vicinity of the test specimen.

15. A test specimen testing system that tests a test specimen formed by a vehicle or a portion thereof, comprising:
a testing apparatus on which the test specimen is mounted or to which the test specimen is connected;
simulated rotating bodies that simulate tire-fitted wheels of another vehicle traveling in the vicinity of the test specimen; and
a water supply unit that supplies water to the simulated rotating bodies so as to cause splashing to be generated from the simulated rotating bodies.

16. A test specimen testing system that tests a test specimen formed by a vehicle or a portion thereof, comprising:
a testing apparatus on which the test specimen is mounted or to which the test specimen is connected; and
a splashing simulator that simulates splashing from tire-fitted wheels of the test specimen.
